# EUROPÄISCHE PATENTSCHRIFT

(11) **EP 1 206 419 B1**
(45) Veröffentlichungstag und Bekanntmachung des Hinweises auf die Patenterteilung: **25.10.2006**
(21) Anmeldenummer: 00956454.3
(22) Anmeldetag: 16.08.2000
(51) Int. Cl.: C03B 5/173, C03B 5/02, C03B 5/185, C03B 5/225, C03B 5/44

(54) **VERFAHREN UND VORRICHTUNG ZUM HERSTELLEN VON FARBIGEN GLÄSERN**
METHOD AND DEVICE FOR PRODUCING COLOURED GLASSES
PROCEDE ET DISPOSITIF DE REALISATION DE VERRES COLORES

(30) Priorität: 21.08.1999 DE 19939785
(43) Veröffentlichungstag der Anmeldung: 22.05.2002
(73) Patentinhaber: Schott AG, 55122 Mainz (DE)
(72) Erfinder: RÖMER, Hildegard, D-61184 Karben (DE); KIEFER, Werner, D-55123 Mainz (DE); SCHMIDBAUER, Wolfgang, D-55126 Mainz (DE)
(74) Vertreter: Dr. Weitzel & Partner
(86) Internationale Anmeldenummer: PCT/EP2000/007989
(87) Internationale Veröffentlichungsnummer: WO 2001/014266

(56) Entgegenhaltungen:
- FR-A- 2 613 351
- US-A- 3 244 495
- US-A- 3 942 968
- J.MOULIN ET AL.: "Nouveaux développements dans la fusion des verres réfractaires" VERRES ET REFRACTAIRES, ARTICLES ORIGINAUX., Bd. 26, Nr. 4-5, Juli 1972 (1972-07) - Oktober 1972 (1972-10), Seiten 123-127, XP002150540 INSTITUT DU VERRE, PARIS, FR

## Beschreibung

Der Glasherstellungsprozeß beginnt mit dem Einschmelzen von sogenanntem Gemenge oder von Scherben. Das Schmelzen wird im allgemeinen in einer Schmelzwanne durchgeführt. Diese ist aus Feuerfestmaterial gemauert. Dabei werden Temperaturen bis zu 1650° C erreicht.

An den Schmelzprozeß schließt sich ein Läuterprozeß an. Dieser dient dazu, physikalisch oder chemisch gebundene Gase aus der Schmelze auszutreiben. Dabei werden besonders hohe Temperaturen von bis zu 3000° C angestrebt.

Will man farbige Gläser herstellen, so wird der Farbstoff dem gesamten Prozeß bereits zu einem frühen Stadium zugesetzt, nämlich dem Gemenge oder den Scherben beim Schmelzprozeß. Dieses frühe Zugeben des Farbstoffes hat den Sinn, eine möglichst innige Durchmischung des gesamten Eintrages zu erhalten, somit Farbstoff einerseits und Glas andererseits, um Schlieren zu vermeiden.

Einschmelzwannen haben ein relativ großes Volumen. Bei relativ kleinen Chargen mit unterschiedlich gefärbten Gläsern ist ein relativ häufiger Austausch des Inhalts der Einschmelzwanne notwendig. Der Austausch muß ein vollständiger sein, um unerwünschte Abweichungen von der angestrebten nachfolgenden Farbe zu vermeiden. Im Hinblick auf das genannte große Volumen der Einschmelzwanne dauert der Austausch entsprechend lange Zeit. Dies bedeutet, daß der Wechsel von einer Farbe auf eine andere mit langen Ausfallzeiten verbunden ist. Ein schnelles Reagieren auf Kundenwünsche und auf neue Anforderungen bezüglich Färbungen ist nicht möglich.

Es wurde auch schon versucht, den Farbstoff erst nach dem Einschmelzbecken der Schmelze zuzuführen. Dabei ist jedoch die Homogenisierung nicht immer gewährleistet.

US-A-3 942 968 offenbart eine Vorrichtung zum Herstellen von farbigen Gläsern, mit einem Schmelzgefäß zum Erzeugen einer Schmelze sowie mit einer Farbstoff-Zuführeinrichtung, die dem Schmelzgefäß nach - und einer Homogenisierungvorrichtung vorgeschaltet ist. Die Beheizung erfolgt mittels Elektroden.

FR-A-2 613 351 beschreibt eine Vorrichtung, bei welcher die Schmelze einem induktionsbeheizten Schmelzaggregat zugeführt wird, ohne dass hierbei ein Skulltiegel erwähnt ist.

Der Erfindung liegt die Aufgabe zugrunde, ein Verfahren und eine Vorrichtung anzugeben, mit welchen auch häufige Farbwechsel möglich sind, ohne dass es zu langen Ausfallzeiten kommt, und zwar bei einer guten Durchmischung von Farbstoff und Glas.

Diese Aufgabe wird durch die unabhängigen Ansprüche gelöst.

Die Erfinder haben erkannt, dass eine Zugabe von Farbstoff auch nach dem Einschmelzbecken bei Erfüllung der genannten Aufgabe dann möglich ist, wenn dem Einschmelzbecken ein mit Hochfrequenz beheizter Skulltiegel nachgeschaltet ist. Ein solcher Skulltiegel ist beispielsweise aus DE 33 16 546 C1 bekannt geworden. Er weist eine Wandung auf, die aus einem Kranz von vertikalen Metallrohren gebildet ist, die wassergekühlt sind. Dabei verbleibt jeweils zwischen zwei einander benachbarten Metallrohren ein schlitzartiger Zwischenraum. Das vom Schwingkreis einer Spule erzeugte elektromagnetische Hochfrequenzfeld durchdringt die gekühlte Wand ohne - beziehungsweise mit wenig - Verlusten und steht in der heißen, elektrisch leitfähigen Schmelze zur Erzeugung von Wirbelströmen und damit von joulescher Wärme zur Verfügung.

Im Skulltiegel treten starke Konvektionsströmungen auf. Die Schmelze ist nämlich aufgrund der Wasserkühlung an den Wänden des Skulltiegels in engen Zonen sehr kalt, während sie nur wenige Millimeter hiervon entfernt durch die Absorption von elektromagnetischer Energie extrem heiß ist.

Diese großen Temperaturgradienten, die innerhalb einer Strecke von wenigen Millimetern bis zu 1500 °C und mehr erreichen können, führen zum Einsetzen von extrem schnellen Konvektionswalzen und damit zu einer sehr heftigen und effektiven Durchmischung der Schmelzbereiche. Die Durchmischung bewirkt nicht nur einen Temperatur- und Dichteausgleich sondern insbesondere auch den hier erwünschten Ausgleich der unterschiedlich chemischen Synthesen (Massenaustausch) und damit eine Homogenisierung der Färbung.

Weiterhin kann die Viskosität der Schmelze in einem solchen Skull-Aggregat, in dem keine Temperaturgrenzen durch Korrosion des Wandmaterials vorgegeben sind, nahezu beliebig erniedrigt werden, was die Konvektion weiter verstärkt und damit die Durchmischung erleichtert. Optimale Viskositäten für eine effektive Durchmischung liegen im Bereich kleiner 10² dPas, was bei vielen hochschmelzenden Glassystemen - wie z.B. den Alumosilicatgläsern und Glaskeramiken - Temperaturen über 1700° C erfordert. Solche Temperaturen sind mit klassischen Aggregaten aufgrund der Korrosion der Feuerfestmaterialien nicht zugänglich. In HF-beheizten Skulltiegeln sind solche Schmelztemperaturen vollkommen unproblematisch erreichbar.

Gemäß der Erfindung wird somit der Farbstoff hinter dem Einschmelzbecken und vor einem mit Hochfrequenz beheizten Skulltiegel der Schmelze zugeführt. Der Farbstoff kann auch im Skulltiegel selbst zugeführt werden. Maßgeblich ist, daß der Farbstoff an einer solchen Stelle des Prozesses zugeführt wird, daß er noch von der genannten Konvektionswalze erfaßt und damit gründlich mit der Schmelze durchmischt werden kann.

Der Skulltiegel wird im allgemeinen ein Läutertiegel sein. Der Skulltiegel hat eine vertikale Achse. Es ist aber auch denkbar, den Farbstoff vor oder in einer Skullrinne zuzugeben, das heißt einer Rinne, die nach dem Skull-Prinzip aufgebaut ist und demgemäß einerseits wassergekühlte Rohre umfaßt, die die Wandung der Rinne bilden, und andererseits eine Hochfrequenzspule, über welche Energie in den Rinneninhalt eingekoppelt wird.

### Ausführungsbeispiele:

In diskontinuierlichen Tiegelversuchen mit Schmelzvolumina von 4 l bis 8 l wurden die Durchmischung in einem Skulltiegel am Beispiel einer Alumosilicatglaskeramik untersucht. Den Schmelzen wurden bei 1800° C bis 2000° C Schmelztemperatur wenige Gramm eines oxidischen Farbstoffes wie Kobaltoxid oder Vanadiumoxid direkt über die Schmelzoberfläche zugefügt. Maximal 5 Minuten nach der Zugabe des Farbstoffes wurde die Energiezufuhr ausgeschaltet und die Schmelze im Tiegel gekühlt. Der Tiegelinhalt war bereits nach dieser kurzen Verweilzeit nahezu vollkommen homogen durchfärbt. Lediglich im Bereich des Tiegelbodens, der bei diesen diskontinuierlichen Versuchen nicht an der Konvektion beteiligt ist, waren noch Inhomogenitäten zu beobachten, die jedoch bei einem kontinuierlichen Prozeß oder durch höhere Schmelztemperaturen (T > 2000° C) ausgeschaltet werden können.

In kontiniuierlichen Prozessen kann entweder auch der Farbstoff pur oder aber auch ein mit Farbstoff hochdotiertes Glas der Schmelze zugefügt werden. Insbesondere bei Zufuhr über einen Schmelztiegel, der zwischen Einschmelzbereich und HF-Tiegel geschaltet wird, ist ein Glas aufgrund der Schmelzbarkeit dem reinen Farbstoff vorzuziehen. Auch die Dosierung ist hier in der Regel unkomplizierter. Bei Zufuhr über einen Stab, kann der Farbstoff entweder ebenfalls als Glaskomponente des Stabes eingeführt werden oder man verpreßt den Farbstoff mit einem Grundmaterial.

Die Erfindung ist anhand der Zeichnung näher erläutert. Darin ist schematisch folgendes dargestellt:

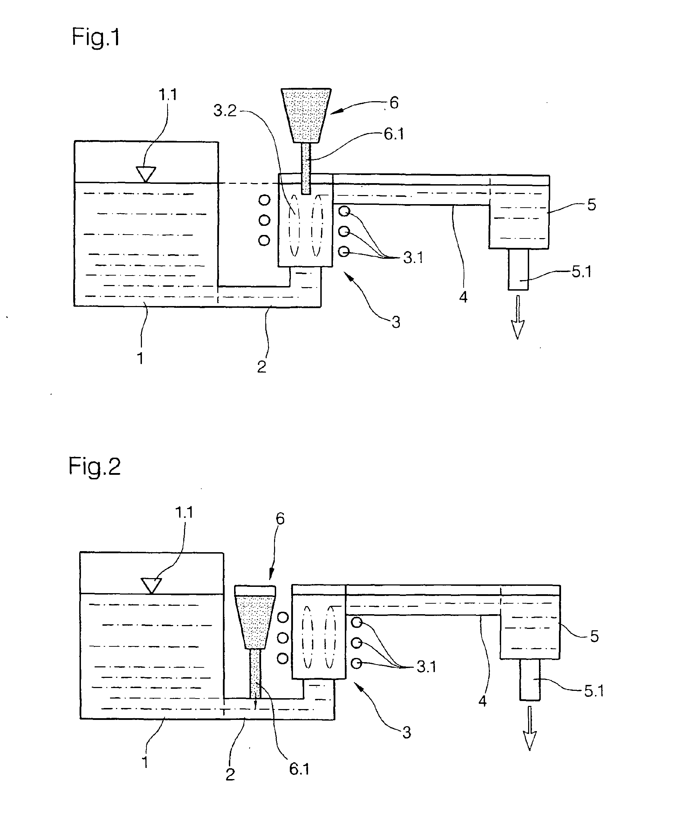

Die Figuren 1 bis 4 zeigen jeweils eine Anlage zum Erzeugen farbiger Gläser. Dabei erfolgt die Farbstoffzufuhr an verschiedenen Stellen.

In Figur 1 erkennt man eine Einschmelzwanne 1. Hierin befindet sich eine Glasschmelze mit einem Schmelzenspiegel 1.1.

An den Bodenbereich der Einschmelzwanne 1 schließt sich eine Rinne 2 an. Diese mündet in den Bodenbereich eines Skulltiegels 3. Der Skulltiegel 3 ist von Wicklungen 3.1 einer Hochfrequenzspule umgeben. Man erkennt die schematisch dargestellte Konvektionswalze 3.2. Skulltiegel 3 dient dem Läutern der in Einschmelzwanne 1 hergestellten Schmelze.

Es schließt sich eine weitere Rinne 4 an. Diese führt aus dem oberen Bereich des Skulltiegels 3 geläuterte Schmelze einem Konditioniergefäß 5 zu. Dieses hat einen Auslaß 5.1.

Entscheidend ist, daß der Farbstoff dem Skulltiegel 3 zugefügt wird, und zwar aus einem Farbstoffbehälter 6, dessen Auslauf 6.1 in den Skulltiegel 3 mündet.

Die Anordnung ist relativ einfach. Sie hat jedoch den Nachteil, daß die Konvektion im Skulltiegel 3 nur relativ begrenzt genutzt werden kann.

Die Ausführungsform gemäß Figur 2 ist im wesentlichen dieselbe, wie jene gemäß Figur 1. Ein Unterschied besteht jedoch in folgendem: Farbstoffbehälter 6 mit Auslauf 6.1 ist derart angeordnet, daß der Farbstoff 6.1 in die Verbindungsleitung 2 injiziert wird. Dies erreicht man dadurch, daß man den Druck im Farbstoffbehälter 6 ("Farbfeeder") geringfügig höher einstellt, als den Druck in der Verbindungsleitung 2. Je nach Dichte des zugefügten Farbkonzentrates muß der Schmelzenspiegel im Farbfeeder 6 gegenüber dem Schmelzspiegel 1.1 im übrigen System variiert werden. Ist die Dichte des Farbkonzentrates höher, als die Dichte der Glasschmelze, so ist der Schmelzspiegel im Farbfeeder 6 gleich oder niedriger als im Einschmelzbereich zu wählen. Ist die Dichte des Farbkonzentrates niedriger, als die Dichte der Glasschmelze, so muß der Schmelzstand des Konzentrates im Farbfeeder 6 höher als der Schmelzstand 1.1 in der Einschmelzwanne 1 gewählt werden. Die Zuführung des Farbkonzentrates kann entweder alleine oder durch den hydrostatischen Druck sowie die Viskosität des Konzentrates geregelt werden. Auch ist es denkbar, den Konzentrat-Zufuhrraum zusätzlich mit einer Über- oder Unterdruckregelung zu versehen, um die Farbstoffmenge unabhängig von der Schmelzstandsdifferenz und der Viskosität regeln zu können.

Der Tiegel kann beispielsweise aus Platin aufgebaut sein.

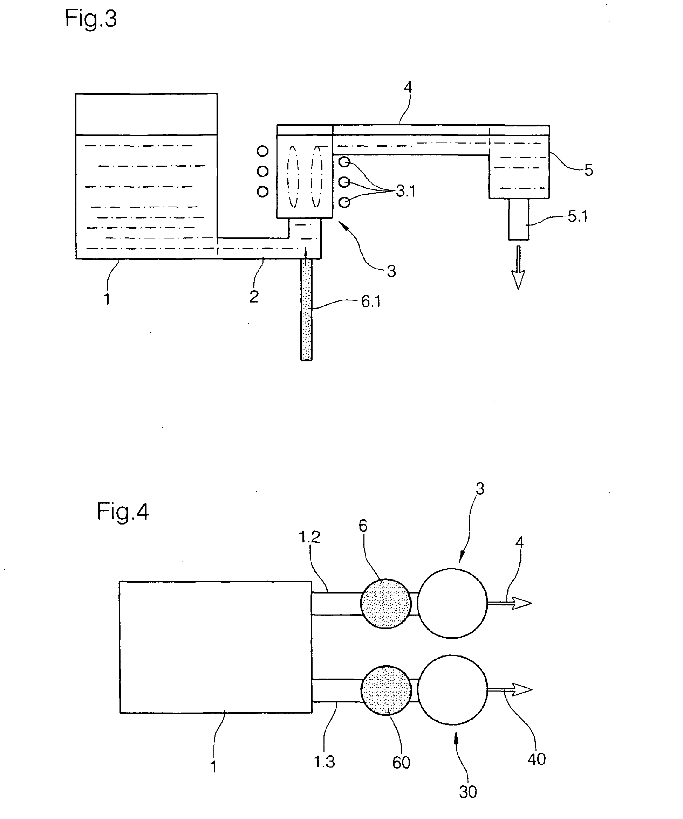

Der grundsätzliche Aufbau der Anlage gemäß Figur 3 ist derselbe, wie jener der Figuren 1 und 2. Ein Unterschied besteht darin, daß das Farbstoffkonzentrat mittels einer Rohrleitung 6.1 zugeführt wird, die nach Art einer Elektrode in die Schmelze eintaucht. Die Durchführung ist dabei luft- oder wassergekühlt, um die Dichtheit sicherzustellen. Beim Nachschieben von Farbkonzentrat wird die Kühlung bei Bedarf reduziert.

Figur 4 zeigt eine weitere Option des hier beschriebenen Farbfeeders 6. Die Einschmelzwanne 1 weist hierbei zwei Auslässe 1.2, 1.3 auf. Schematisch sind zwei Skulltiegel 3, 30 vorgesehen. Jedem Skulltiegel 3 beziehungsweise 30 ist ein Farbfeeder 6 beziehungsweise 60 zugeordnet. Diese Option erlaubt es, mit einer Wanne zeitgleich zwei veschiedene Farbgläser herzustellen. Statt zweier Auslässe 1.2 und 1.3 ist es möglich, auch drei oder mehrere Auslässe mit zugeordneten Farbfeedern und zugeordneten Skulltiegeln zu verwenden.

Die Pfeile 4 und 40 deuten an, daß die jeweiligen farbigen Gläser einer Weiterverarbeitung zugeführt werden.

## Patentansprüche

1. Verfahren zum Herstellen von farbigen Gläsern;
1.1 es wird zunächst eine Schmelze aus Gemenge oder Glasscherben hergestellt;
1.2 die Glasschmelze wird in wenigstens einem weiteren Gefäß weiterbearbeitet;
1.3 im Zuge der Weiterbearbeitung wird die Schmelze einem Skulltiegel oder einer Skullrinne zugeführt, umfassend wassergekühlte Rohre, die die Wand des Skulltiegels beziehungsweise der Skullrinne bilden, femer mit einer Hochfrequenzspule zum Einkoppeln von Energie in den Inhalt des Skulltiegels beziehungsweise der Skullrinne;
1.4 der Schmelze wird unmittelbar vor dem Skulltiegel beziehungsweise der Skullrinne oder direkt im Skulltiegel beziehungsweise in der Skullrinne ein Farbstoff zugeführt.

2. Verfahren nach Anspruch 1, **gekennzeichnet durch** die folgenden Merkmale:
2.1 nach dem Einschmelzen werden mindestens zwei Glasschmelzstränge abgezweigt;
2.2 mindestens einer der Glasschmelzstränge wird einem Skulltiegel oder einer Skullrinne zugeführt, wobei wassergekühlte Rohre die Wand des Skulltiegels beziehungsweise der Skullrinne bilden, und wobei eine Hochfrequenzspule zum Einkoppeln von Energie in den Inhalt des Skulltiegels beziehungsweise der Skullrinne, verwendet werden;
2.3 bei mindestens einem der Glasstränge, die einen Skulltiegel oder eine Skullrinne aufweisen, wird unmittelbar vor dem Skulltiegel beziehungsweise der Skullrinne oder direkt in den Skulltiegel oder die Skullrinne ein Farbstoff zugeführt.

3. Vorrichtung zum Herstellen farbiger Gläser;
3.1 mit einem Schmelzgefäß (1) zum Erzeugen einer Schmelze aus Glasscherben oder aus Gemenge;
3.2 mit einem dem Schmelzgefäß (1) nachgeschalteten Skulltiegel (3) oder einem dem Schmelzgefäß (1) nachgeschalteten Skullrinne, umfassend wassergekühlte Rohre, die die Wand des Skulltiegels beziehungsweise der Skullrinne bilden, femer eine Hochfrequenzspule zum Einkoppeln von Energie in den Inhalt des Skulltiegels beziehungsweise der Skullrinne;
3.3 mit einer Farbstoff-Zufuhreinrichtung (6, 6.1);
3.4 die Farbstoff-Zufuhreinrichtung (6, 6.1) ist dem Schmelzgefäß (1) nachgeschaltet, und dem Skulltiegel (3) beziehungsweise der Skullrinne unmittelbar vorgeschaltet, oder die Farbstoff-Zufuhreinrichtung (6, 6.1) ist dem Skulltiegel (3) beziehungsweise der Skullrinne derart zugeordnet, daß der Farbstoff direkt der darin enthaltenen Schmelze zugeführt wird.

4. Vorrichtung zum Herstellen farbiger Gläser,
4.1 mit einem Schmelzgefäß (1) zum Herstellen einer Schmelze aus Glasgemenge oder Scherben;
4.2 vom Schmelzgefäß (1) sind zwei Glasstränge (1.2, 1.3) abgezweigt;
4.3 mindestens einer der Glasstränge wird einem Skulltiegel (3) oder einer Skullrinne Zugeführt und es sind wassergekühlte Rohre vorgesehen, die die Wand des Skulltiegels beziehungsweise der Skullrinne bilden, sowie eine Hochfrequenzspule zum Einkoppeln von Energie in den Inhalt des Skulltiegels oder der Skullrinne, außerdem eine Farbstoff-Zufuhreinrichtung (6, 6.1);
4.4 die Farbstoff-Zufuhreinrichtung (6, 6.1) ist dem Skulltiegel (3) beziehungsweise der Skullrinne derart zugeordnet, daß der Farbstoff unmittelbar der im Skulltiegel (3) beziehungsweise in der Skullrinne enthaltenen Schmelze zugeführt wird.

## Claims

1. A method for producing colored glass;
1.1 a melt is produced at first from a glass batch or broken glass;
1.2 the glass melt is further processed in at least one further vessel;
1.3 in the course of further processing, the melt is supplied to a skull crucible or a skull groove, comprising water-cooled pipes forming the wall of the skull crucible or skull groove, and further with a high-frequency coil for injecting energy into the content of the skull crucible or skull groove;
1.4 a dye-stuff is supplied to the melt directly before the skull crucible or the skull groove, or directly in the skull crucible or in the skull groove.

2. A method according to claim 1, **characterized** bv the following features:
2.1 after the melting at least two glass melt strands are diverted;
2.2 at least one of the glass melt strands is supplied to a skull crucible or a skull groove, with water-cooled pipes forming the wall of the skull crucible or the skull groove, and with a high-frequency coil being used for injecting energy into the content of the skull crucible or skull groove;
2.3 in the case of at least one of the glass strands comprising a skull crucible or skull groove, a dye-stuff is supplied either directly before the skull crucible or the skull groove or directly into the skull crucible or the skull groove.

3. An apparatus for producing colored glass;
3.1 with a melting vessel (1) for producing a melt from broken glass or a glass batch;
3.2 with a skull crucible (3) situated downstream of the melting vessel (1) or a skull groove situated downstream of the melting vessel (1), comprising water-cooled pipes forming the wall of the skull crucible or the skull groove, further a high-frequency coil for injecting energy into the content of the skull crucible or the skull groove;
3.3 with a dye-stuff feed device (6, 6.1);
3.4 the dye-stuff feed device (6, 6.1) is situated downstream of the melting vessel (1) and situated directly upstream of the skull crucible (3) or the skull groove, or the dye-stuff feed device (6, 6.1) is assigned to the skull crucible (3) or the skull groove in such a way that the dye-stuff is supplied directly to the melt contained therein.

4. An apparatus for producing colored glass;
4.1 with a melting vessel (1) for producing a melt from a glass batch or broken glass;
4.2 two glass strands (1.2, 1.3) are diverted from the melting vessel;
4.3 at least one of the glass strands is supplied to a skull crucible (3) or a skull groove, and water-cooled pipes are provided which form the wall of the skull crucible or the skull groove as well as a high-frequency coil for injecting energy into the content of the skull crucible or the skull groove, and a dye-stuff feed device (6, 6.1);
4.4 the dye-stuff feed device (6, 6.1) is assigned to the skull crucible (3) or the skull groove in such a way that the dye-stuff is supplied directly to the melt contained in the skull crucible (3) or the skull groove.

## Revendications

1. Procédé pour la fabrication de verres colorés :
1.1 une masse en fusion est tout d'abord fabriquée à partir de fritte ou de calcin ;
1.2 la masse de verre en fusion est transformée dans au moins une autre cuve ;
1.3 au cours de la transformation, la masse en fusion est amenée à un creuset à fond refroidi ou à une rigole à fond refroidi contenant des tubes refroidis par eau qui forment la paroi du creuset à fond refroidi ou de la rigole à fond refroidi, et avec un bobinage à haute fréquence destiné à communiquer de l'énergie au contenu du creuset à fond refroidi ou de la rigole à fond refroidi ;
1.4 un pigment est ajouté à la masse en fusion immédiatement avant le creuset à fond refroidi ou la rigole à fond refroidi ou directement dans le creuset à fond refroidi ou la rigole à fond refroidi.

2. Procédé selon la revendication 1, **caractérisé en ce que** :
2.1 après la fusion, au moins deux jets de verre en fusion sont partagés ;
2.2 l'un au moins des jets de verre en fusion est amené à un creuset à fond refroidi ou une rigole à fond refroidi, des tubes refroidis par eau formant la paroi du creuset à fond refroidi ou de la rigole à fond refroidi, et un bobinage à haute fréquence étant utilisé pour communiquer de l'énergie au contenu du creuset à fond refroidi ou de la rigole à fond refroidi ;
2.3 un pigment est ajouté dans au moins un des jets de verre associés à un creuset à fond refroidi ou à une rigole à fond refroidi, immédiatement avant le creuset à fond refroidi ou la rigole à fond refroidi ou directement dans le creuset à fond refroidi ou la rigole à fond refroidi.

3. Dispositif pour la fabrication de verres colorés,
3.1 avec une cuve de fusion (1) pour produire une masse en fusion à partir de calcin ou de fritte ;
3.2 avec un creuset à fond refroidi (3) monté en aval de la cuve de fusion (1) ou une rigole à fond refroidi montée en aval de la cuve de fusion (1), comprenant des tuyaux refroidis par eau qui forment la paroi du creuset à fond refroidi ou de la rigole à fond refroidi, et avec un bobinage à haute fréquence pour communiquer de l'énergie au contenu du creuset à fond refroidi ou de la rigole à fond refroidi ;
3.3 avec un dispositif d'alimentation en pigment (6, 6.1);
3.4 le dispositif d'alimentation en pigment (6, 6.1) est monté en aval de la cuve de fusion (1) et immédiatement avant le creuset à fond refroidi (3) ou la rigole à fond refroidi, ou bien le dispositif d'alimentation en pigment (6, 6.1) est disposé par rapport au creuset à fond refroidi (3) ou à la rigole à fond refroidi de telle manière que le pigment soit directement amené dans la masse en fusion qui y est contenue.

4. Procédé pour la fabrication de verres colorés,
4.1. avec une cuve de fusion (1) pour produire une masse en fusion à partir de calcin ou de fritte ;
4.2 deux jets de verre en fusion (1.2, 1.3) sont partagés à partir de la cuve de fusion (1);
4.3 l'un au moins des jets de verre en fusion est amené à un creuset à fond refroidi (3) ou une rigole à fond refroidi, et il est prévu des tubes refroidis par eau formant la paroi du creuset à fond refroidi ou de la rigole à fond refroidi, ainsi qu'un bobinage à haute fréquence pour communiquer de l'énergie au contenu du creuset à fond refroidi ou de la rigole à fond refroidi, ainsi qu'un dispositif d'alimentation en pigment (6, 6.1) ;
4.4 le dispositif d'alimentation en pigment (6, 6.1) est disposé par rapport au creuset à fond refroidi (3) ou à la rigole à fond refroidi de telle manière que le pigment soit directement amené dans la masse en fusion contenue dans le creuset à fond refroidi (3) ou la rigole à fond refroidi.
